# EUROPÄISCHE PATENTANMELDUNG

(11) **EP 4 406 399 A1**
(43) Veröffentlichungstag der Anmeldung: **31.07.2024**
(21) Anmeldenummer: 23212667.2
(22) Anmeldetag: 28.11.2023
(51) Int. Cl.: A01D 41/12

(54) **SELBSTFAHRENDE ERNTEMASCHINE**

(30) Priorität: 26.01.2023 DE 102023101874
(71) Anmelder: CLAAS Selbstfahrende Erntemaschinen GmbH, 33428 Harsewinkel (DE)
(72) Erfinder: Renneke, Elmar, 33129 Delbrück (DE); Schnitger, Günter, 49163 Hunteburg (DE); Thies, Sören, 33442 Herzebrock-Clarholz (DE)
(74) Vertreter: CLAAS Gruppe

(57) **Zusammenfassung**

Die vorliegende Anmeldung betrifft eine selbstfahrende Erntemaschine (1), insbesondere in Form eines Feldhäckslers, umfassend einen Antriebsmotor (2), ein Kühlsystem (5) zur Kühlung des Antriebsmotors (2), das Kühlsystem (5) umfassend ein Gehäuse (9), einen in dem Gehäuse angeordneten Kühlkörper (6), ein Kühlventilator (7) zur Erzeugung eines Kühlluftstroms entlang des Kühlkörpers (6), eine dem Kühlkörper (6) vorgeordnete Siebeinrichtung (8), wobei die Siebeinrichtung (8) dazu vorgesehen und eingerichtet ist, in dem Kühlluftstrom mitgeführte Schmutzpartikel zurückzuhalten und auf diese Weise an einer Weiterleitung zu dem Antriebsmotor (2) zu hindern.

Um eine Erntemaschine bereitzustellen, bei der die Reinigung des Kühlsystems gegenüber dem Stand der Technik vereinfacht möglich ist, wird erfindungsgemäß vorgeschlagen, dass das Gehäuse (9) eine Bodenplatte (10) sowie mindestens eine oberhalb der Bodenplatte (10) angeordnete, an die Bodenplatte (10) angrenzende Auslassöffnung (11, 12) umfasst.

## Beschreibung

Die vorliegende Anmeldung betrifft eine selbstfahrende Erntemaschine gemäß dem Oberbegriff von Anspruch 1.

Die Erntemaschine, die insbesondere in Form eines Feldhäckslers ausgebildet sein kann, umfasst einen Antriebsmotor, der typischerweise von einer Verbrennungskraftmaschine gebildet ist. Der Antriebsmotor dient unter anderem dazu, mindestens ein Arbeitsorgan der Erntemaschine zu betreiben sowie für einen Vortrieb der Erntemaschine auf einem Untergrund zu sorgen.

Der Antriebsmotor entwickelt während eines Betriebs der Erntemaschine Abwärme, die abgeführt werden muss. Daher umfasst die Erntemaschine ferner ein Kühlsystem zur Kühlung des Antriebsmotors. Das Kühlsystem umfasst wiederum einen Kühlkörper, der beispielsweise eine Vielzahl von Kühllamellen aufweisen kann, und einen Kühlventilator zur Erzeugung eines Kühlluftstroms. Der Kühlventilator ist derart relativ zu dem Kühlkörper angeordnet, dass der mittels des Kühlventilators erzeugte Kühlluftstrom entlang des Kühlkörpers strömt und/oder den Kühlkörper durchströmt. Insbesondere kann der Kühlventilator an einem Gehäuse des Kühlsystems angeordnet sein, innerhalb dessen der Kühlkörper gelagert ist.

Das Kühlsystem umfasst ferner eine Siebeinrichtung, die dem Kühlkörper vorgeordnet ist. Die Siebeinrichtung ist dazu vorgesehen und eingerichtet, in dem Kühlluftstrom mitgeführte Schmutzpartikel zurückzuhalten und auf diese Weise an einer Weiterleitung zu dem Antriebsmotor zu hindern. Eine solche Siebeinrichtung hat ferner den Vorteil, dass die Schmutzpartikel von dem Kühlkörper ferngehalten werden. Hierzu umfasst die Siebeinrichtung eine Siebfläche, die beispielsweise von einem Siebelement in Form eines engmaschigen Siebgitters gebildet sein kann. Im Zuge des Betriebs des Kühlsystems lagern sich an dem Siebelement sukzessive Schmutzpartikel ab.

Trotz der Siebeinrichtung ist es für einen zuverlässigen Betrieb der Erntemaschine regelmäßig erforderlich, den Kühlkörper zu reinigen. Dies kann insbesondere mittels eines Hochdruckreinigers, d.h. mittels des Einsatzes von Wasser, erfolgen. Da der Kühlkörper in dem Gehäuse angeordnet ist, wird das Gehäuse in seinem Innenraum mit Wasser und abgereinigtem, nassem Schmutz beaufschlagt. Sowohl das Wasser als auch der Schmutz müssen abgeführt werden.

Die Problematik der Verschmutzung eines Kühlkörpers sowie eine Verhinderung derselben ist bereits in der europäischen Patentanmeldung 0 667 447 A1 behandelt. Diese beschreibt eine selbstfahrende Erntemaschine, die über ein Kühlsystem mit einer Siebeinrichtung und einer Reinigungsvorrichtung verfügt. Die Reinigungsvorrichtung verfügt über einen Reinigungskopf, der mit einem Bereich einer Siebfläche der Siebeinrichtung zusammenwirkt, wobei infolge einer Bewegung des die Siebfläche definierenden Siebelements während eines Betriebs der Erntemaschine der mit dem Reinigungskopf zusammenwirkende Bereich der Siebfläche fortwährend verändert wird, sodass effektiv die gesamte Siebfläche mittels des Reinigungskopfs bearbeitbar ist.

Weiterhin ist die US 6 321 830 B1 bekannt, die einen Kühlkörper mit einem an seiner Oberseite angeordneten Kühlventilator beschreibt, der einen auf einen Boden eines Gehäuses, in dem der Kühlkörper gelagert ist, gerichteten Kühlluftstrom erzeugt. An dem Boden befindet sich mittig eine Senke mit einer verschließbaren Öffnung, durch die Schmutzpartikel ableitbar sind. Kühllamellen des Kühlkörpers sind an Seitenwänden des Gehäuses angeordnet. Der Kühlluftstrom muss somit zum Durchströmen der Kühllamellen seitlich umgelenkt werden, sodass sich ein erhöhter Strömungswiderstand ergibt. Darüber hinaus ist das mittige Abführen der Schmutzpartikel dahingehend negativ, als die Schmutzpartikel mittig abgeführt und damit auf weitere Bauteile der Erntemaschine geleitet werden, sodass zur vollständigen Entfernung der Schmutzpartikel weitere Reinigungsschritte erforderlich sind.

Der vorliegenden Anmeldung liegt mithin die Aufgabe zugrunde, eine Erntemaschine bereitzustellen, bei der die Reinigung des Kühlsystems gegenüber dem Stand der Technik vereinfacht möglich ist.

Die zugrunde liegende Aufgabe wird erfindungsgemäß mittels einer Erntemaschine mit den Merkmalen des Anspruchs 1 gelöst. Vorteilhafte Ausgestaltungen ergeben sich aus den zugehörigen Unteransprüchen.

Die erfindungsgemäße Erntemaschine ist dadurch gekennzeichnet, dass das Gehäuse, in dem der Kühlkörper angeordnet ist, eine Bodenplatte sowie mindestens eine oberhalb der Bodenplatte angeordnete Auslassöffnung umfasst, die an die Bodenplatte angrenzt. Mit anderen Worten ist die mindestens eine Auslassöffnung unmittelbar oberhalb der Bodenplatte angeordnet, wobei beispielsweise die Auslassöffnung in einer Seitenwand des Gehäuses ausgebildet sein kann. Bevorzugt umfasst das Gehäuse eine Mehrzahl von Auslassöffnungen, wobei bevorzugt eine Mehrzahl von Auslassöffnungen in an die Bodenplatte angrenzender Weise angeordnet ist. Hierbei ist die Bodenplatte derart unterhalb des Kühlkörpers angeordnet oder an ein unteres Ende des Kühlkörpers angeschlossen ausgebildet, dass sich eine Reinigungsflüssigkeit, mit der der Kühlkörper gereinigt wird, zumindest größtenteils, vorzugsweise vollständig, auf der Bodenplatte sammelt. Die Bodenplatte stellt bevorzugt eine "tiefste Stelle" zumindest des Teils des Innenraums des Gehäuses dar, in dem der Kühlkörper angeordnet ist. Die Leitung der Reinigungsflüssigkeit auf die Bodenplatte führt dazu, dass die Reinigungsflüssigkeit ebenso wie die in der Reinigungsflüssigkeit gelösten bzw. von der Reinigungsflüssigkeit mitgeschleppten Schmutzpartikel besonders einfach durch die mindestens eine Auslassöffnung aus dem Gehäuse ausleitbar sind.

Die erfindungsgemäße Erntemaschine hat viele Vorteile. Dadurch, dass die mindestens eine Auslassöffnung oberhalb der Bodenplatte angeordnet ist, ist diese gegenüber dem Stand der Technik besser bzw. einfacher zugänglich und kann dementsprechend auf einfache Art und Weise für eine Reinigung des Kühlkörpers manuell geöffnet und sodann wieder verschlossen werden. Die Anordnung der mindestens einen Auslassöffnung angrenzend an die Bodenplatte hat zudem den Vorteil, dass sich eine Reinigungsflüssigkeit, die auf die Bodenplatte geleitet wird, nicht auf der Bodenplatte ansammeln kann. Für die Ableitung der Reinigungsflüssigkeit durch die Auslassöffnung ist es nämlich lediglich erforderlich, dass ein Flüssigkeitsspiegel der Reinigungsflüssigkeit auf der Bodenplatte bis zu einem unteren Rand der Auslassöffnung ansteigt. Die Reinigungsflüssigkeit kann entsprechend zumindest so weit von der Bodenplatte durch die Auslassöffnung abgeführt werden, bis der Flüssigkeitsspiegel der Reinigungsflüssigkeit auf der Bodenplatte unter den unteren Rand der Auslassöffnung gefallen ist. Die Ausgestaltung der Auslassöffnung in an die Bodenplatte angrenzender Weise sorgt dafür, dass zwischen dem unteren Rand der Auslassöffnung und einer Bodenebene der Bodenplatte fast keine, bevorzugt gar keine, Höhendifferenz besteht, sodass sich im Ergebnis keine Reinigungsflüssigkeit oder zumindest keine nennenswerte Menge derselben auf der Bodenplatte ansammeln kann.

Bei einer Anordnung der mindestens einen Auslassöffnung in einer Seitenwand des Gehäuses besteht des Weiteren der Vorteil, dass Wasser sowie Schmutzpartikel seitlich aus dem Gehäuse abgeleitet werden können, wodurch eine sich anschließende Verschmutzung weiterer Bauteile der Erntemaschine besonders einfach vermeidbar ist. Insbesondere ist es bei einer seitlichen Ableitung der Schmutzpartikel besonders einfach möglich, diese ohne weiteren Kontakt mit weiteren Bauteilen der Erntemaschine aus letzterer heraus zu leiten. Ein sich anschließender Aufwand zur Reinigung weiterer Bauteile der Erntemaschine entfällt hierbei entsprechend.

Weiterhin kann eine solche Ausgestaltung besonders vorteilhaft sein, bei der die Bodenplatte und die mindestens eine Auslassöffnung in einem Abschnitt des Gehäuses ausgebildet sind, der in Strömungsrichtung des Kühlluftstroms betrachtet an die Siebeinrichtung angrenzt. Diese Ausgestaltung hat den Vorteil, dass die Auslassöffnungen dort angeordnet sind, wo erwartungsgemäß die größten Mengen von Schmutzpartikeln anfallen. Infolge einer Ablösung der Schmutzpartikel von dem Kühlkörper mittels einer Reinigungsflüssigkeit ist es demzufolge nicht erforderlich, die Reinigungsflüssigkeit mitsamt den Schmutzpartikeln zunächst entlang einer Flussstrecke zu den Auslassöffnungen zu leiten. Stattdessen kann die Reinigungsflüssigkeit in unmittelbarer Nähe zu dem Ort, an dem die Schmutzpartikel abgelöst werden, aus dem Gehäuse herausgeführt werden.

In einer besonders vorteilhaften Ausgestaltung der Erntemaschine umfasst das Gehäuse mindestens zwei Auslassöffnungen, die an einander gegenüberliegenden Seiten des Gehäuses ausgebildet sind. Bevorzugt sind diese Seiten von Stirnwänden gebildet, sodass die Auslassöffnungen an einander gegenüberliegenden Stirnwänden des Gehäuses ausgebildet sind. Diese Anordnung hat zunächst den Vorteil, dass die Reinigungsflüssigkeit und entsprechende Schmutzpartikel schneller abgeführt werden können, da mehrere Auslassöffnungen zur Verfügung stehen. Ein weiterer Vorteil dieser Ausgestaltung besteht darin, dass durch eine der beiden Öffnungen ein Reinigungsstrahl, beispielsweise in Form eines Flüssigkeitsstrahls oder eines Luftstrahls, in das Gehäuse eingebracht werden kann, während etwaige Schmutzpartikel und dergleichen durch die andere Auslassöffnung aus dem Gehäuse abgeleitet werden können. Mithin ist eine gleichzeitige Einbringung eines Reinigungsmediums in das Gehäuse sowie eine Austragung abgelöster Schmutzpartikel aus dem Gehäuse heraus möglich.

Die erfindungsgemäße Erntemaschine weiter ausgestaltend weist zumindest ein Abschnitt des Gehäuses eine zumindest im Wesentlichen kubische Grundform auf, wobei Flächen zweier einander gegenüberliegenden der Stirnwände des Gehäuses jeweils jeweilige Flächen vier weiterer Seitenwände des Gehäuses, die zusammen mit den Stirnwänden die kubische Grundform des Gehäuses ausbilden, deutlich übersteigen. Mit anderen Worten sind die Stirnwände des die kubische Grundform aufweisenden Abschnitts des Gehäuses flächenmäßig deutlich größer als die vier weiteren Seitenwände des die kubische Grundform aufweisenden Abschnitts des Gehäuses. Diese Ausgestaltung des Gehäuses ist für die Aufnahme eines Kühlkörpers besonders gut geeignet, wobei insbesondere die vergleichsweise großen Flächen der Stirnwände mit entsprechend großen Durchtrittsquerschnitt für den Kühlluftstrom zur Verfügung stehen, sodass an dem Kühlkörper anstehende Wärmeenergie besonders effektiv mittels des Kühlluftstroms abgeführt werden kann.

Weiterhin kann es von Vorteil sein, wenn die mindestens eine Auslassöffnung in eine senkrecht zu der Bodenplatte orientierte Stirnwand des Gehäuses eingebracht ist. Auf diese Weise ist die Auslassöffnung besonders gut von einer Seite des Gehäuses her zugänglich, sodass die besonders einfach geöffnet und verschlossen werden kann. Bevorzugt ist die Auslassöffnung in der Stirnwand ausgebildet, an der die Siebeinrichtung angeordnet ist bzw. der die Siebeinrichtung zugeordnet ist.

Weiterhin kann es besonders vorteilhaft sein, wenn mindestens eine Auslassöffnung in die Wandung (Stirnwand oder Seitenwand) des Gehäuses eingebracht ist, die einem Radkasten der Erntemaschine zugeordnet ist. Auf diese Weise kann eine Reinigungsflüssigkeit, die sich in dem Gehäuse ansammelt, ausgehend von dem Innenraum durch die Auslassöffnung hindurch unmittelbar in den Radkasten übertreten. In dem Radkasten stellen die mit der Reinigungsflüssigkeit ausgetragenen Schmutzpartikel keine Belastung dar, die für die Erntemaschine in irgendeiner Weise nachteilig wirkt. Entsprechend ist die Abführung der Reinigungsflüssigkeit in den Radkasten besonders gut geeignet, die Reinigungsflüssigkeit zu entsorgen. Ein hierdurch entstehender, weiterer Reinigungsaufwand betreffend die Erntemaschine entsteht dabei nicht.

Um die Überleitung der Reinigungsflüssigkeit in den Radkasten möglichst einfach zu gestalten, kann es weiterhin besonders vorteilhaft sein, wenn das Gehäuse zumindest mit einem Bereich in den Radkasten hineinragt, wobei das Gehäuse in dem in den Radkasten hineinragenden Bereich eine Einbuchtung aufweist, sodass im Zuge eines Betriebs der Erntemaschine eine Kollision zwischen einem in dem Radkasten angeordneten Rad und dem Gehäuse vermieden ist. Mit anderen Worten ist das Gehäuse in dem in den Radkasten hineinragenden Bereich an eine Bewegungsbahn des jeweiligen Rades, das in dem Radkasten gelagert ist, angepasst. Hierdurch ist es möglich, die Reinigungsflüssigkeit ausgehend von dem Gehäuse durch die mindestens eine Auslassöffnung direkt in den Radkasten einzuleiten, ohne hierbei ein Kollisionsrisiko des Gehäuses mit dem Rad einzugehen.

Weiterhin bevorzugt umfasst die Erntemaschine mindestens ein Schließelement, mittels dessen die mindestens eine Auslassöffnung wechselweise verschließbar und freigebbar ist. Das Schließelement kann beispielsweise von einer flächigen Platte gebildet sein, die vorzugsweise um eine vertikale oder horizontale Schwenkachse verschwenkbar an dem Gehäuse gelagert ist. Ein derartig ausgebildetes Schließelement kann besonders einfach geöffnet und geschlossen werden, sodass die Auslassöffnung besonders einfach verschließbar und freigebbar ist. Bestimmungsgemäß wird die Auslassöffnung bevorzugt lediglich dann freigegeben, wenn eine Reinigung des Kühlkörpers ansteht. In dieser Situation dient die Auslassöffnung gemäß vorstehender Erläuterung dazu, Reinigungsflüssigkeit sowie etwaige Schmutzpartikel aus dem Gehäuse ausleiten zu können. Auch kann sie dazu dienen, ein Reinigungsmedium, insbesondere eine Reinigungsflüssigkeit, in das Gehäuse einzubringen und auf diese Weise dem Kühlkörper zuzuführen. Wenn kein Reinigungsvorgang läuft, kann das Schließelement die zugehörige Auslassöffnung verschließen, sodass insbesondere kein unbeabsichtigter Eintrag von Schmutzpartikeln in das Gehäuse durch die Auslassöffnung hindurch stattfinden kann.

Zur Arretierung des Schließelements an dem Gehäuse kann es besonders vorteilhaft sein, wenn das Schließelement mittels mindestens eines Befestigungsmittels, vorzugsweise mittels mehrerer Befestigungsmittel, an dem Gehäuse befestigt ist. Die Befestigungsmittel können insbesondere von Schraubbolzen gebildet sein.

Wie vorstehend bereits dargelegt, kann es besonders vorteilhaft sein, wenn das Schließelement um eine Schwenkachse relativ zu dem Gehäuse verschwenkbar gelagert ist, sodass das Schließelement zwischen einer Schließstellung und einer Freigabestellung überführbar ist. Bevorzugt ist hierbei die Schwenkachse von einem Befestigungsmittel definiert, mittels dessen das Schließelement bedarfsweise verdrehfest an dem Gehäuse befestigbar ist. Mithin kann es besonders vorteilhaft sein, wenn die Schwenkachse senkrecht zu der Wandung des Gehäuses, in die die jeweilige Auslassöffnung eingebracht ist, orientiert ist, wobei das Befestigungsmittel, das die Schwenkachse des Schließelement definiert, in diese Wandung eingeschraubt ist. Das Schließelement ist bei dieser Ausgestaltung in einer Ebene um die Schwenkachse verschwenkbar, die parallel zu einer Ebene der Wandung orientiert ist, in die die Auslassöffnung eingebracht ist. Sofern demzufolge beispielsweise die mindestens eine Auslassöffnung in einer vertikal orientierten Stirnwand des Gehäuses angeordnet ist, ist das Befestigungsmittel in horizontale Richtung in die Stirnwand eingeschraubt und definiert die Schwenkachse des Schließelements, das entsprechend in einer vertikal orientierten Ebene relativ zu der Stirnwand und mithin relativ zu der Auslassöffnung verschwenkbar ist.

Sofern das Schließelement zwischen einer Schließstellung und einer Freigabestellung verschwenkbar ist, kann es weiter besonders vorteilhaft sein, wenn das Schließelement mittels zweier Verbindungsmittel an dem Gehäuse befestigt oder befestigbar ist. Hierbei definiert das erste Befestigungsmittel die Schwenkachse und das zweite Befestigungsmittel ist in einer einseitig offenen, vorzugsweise bogenförmigen, Ausnehmung des Schließelements angeordnet. Auf diese Weise ist das zweite Befestigungsmittel dazu geeignet, des Schließelement derart an dem Gehäuse zu arretieren, dass eine Verschwenkung um die von dem ersten Befestigungselement definierte Schwenkachse verhindert ist, wobei für die Auflösung dieser Arretierung ein vollständiges Entfernen des zweiten Befestigungsmittels nicht erforderlich ist. Stattdessen ist es lediglich erforderlich, das zweite Befestigungsmittel derart zu lösen, dass ein Andrücken des Schließelements gegen die Wandung des Gehäuses aufgehoben und damit die Bewegung des Schließelements relativ zu der Wandung freigegeben wird. Aufgrund der einseitig offenen Ausnehmung kann das Schließelement daraufhin relativ zu dem zweiten Befestigungsmittel um die Schwenkachse verschwenkt werden, wobei das Schließelement in seiner Bewegung nicht von dem zweiten Befestigungsmittel gehindert ist. Das Schließelement wird hingegen gewissermaßen an der offenen Seite aus der Ausnehmung des Schließelements seitlich herausgeführt. Folglich ist die Freigabe des Schließelements zur Überführung in dessen Freigabestellung bereits dadurch möglich, dass das zweite Befestigungsmittel lediglich ein wenig gelöst, nicht jedoch vollständig von der Wandung, in die es eingeschraubt ist, entfernt wird. Entsprechend ist die Bedienung des Schließelements und die damit verbundene Überführung desselben zwischen seiner Schließstellung und seiner Freigabestellung besonders einfach möglich.

Schließlich kann eine solche Ausgestaltung der Erntemaschine vorteilhaft sein, bei der an dem Gehäuse des Kühlsystems ein Kühlmittelanschluss zur Zuführung und/oder zur Abführung von Kühlmittel zu bzw. von dem Kühlkörper ausgebildet ist, wobei der Kühlmittelanschluss benachbart zu der mindestens einen Auslassöffnung angeordnet ist. Diese Ausgestaltung hat den Vorteil, dass der Kühlmittelanschluss besonders gut zugänglich ist bzw. eine Zugänglichkeit des Gehäuses lediglich in einem Bereich geschaffen werden muss, in dem sowohl die mindestens eine Auslassöffnung als auch der Kühlmittelanschluss angeordnet sind. Auf diese Weise können sowohl die Auslassöffnung verschlossen oder freigegeben als auch unabhängig davon der Kühlmittelanschluss bearbeitet werden, ohne dass hierfür zwei verschiedene Bereiche des Gehäuses zugänglich sein müssen.

Erfindung ist nachstehend anhand eines Ausführungsbeispiels, das in den Figuren dargestellt ist, näher erläutert. Es zeigt:
- Fig. 1:: Einen schematischen Querschnitt durch eine erfindungsgemäße Erntemaschine,
- Fig. 2:: Eine perspektivische Ansicht eines Kühlsystems der Erntemaschine gemäß Figur 1,
- Fig. 3:: Ein Detail einer unteren Ecke eines Gehäuses des Kühlsystems gemäß Figur 2,
- Fig. 4:: Ein Detail einer Auslassöffnung und eines damit zusammenwirkenden Schließelements,
- Fig. 5:: Eine Darstellung des Kühlsystems gemäß Figur 2 in seiner Anbindung an einen Radkasten der Erntemaschine gemäß Figur 1,
- Fig. 6:: eine weitere Darstellung der unteren Ecke des Gehäuses gemäß Figur 3 in ihrer Einbindung in den Radkasten gemäß Figur 5.

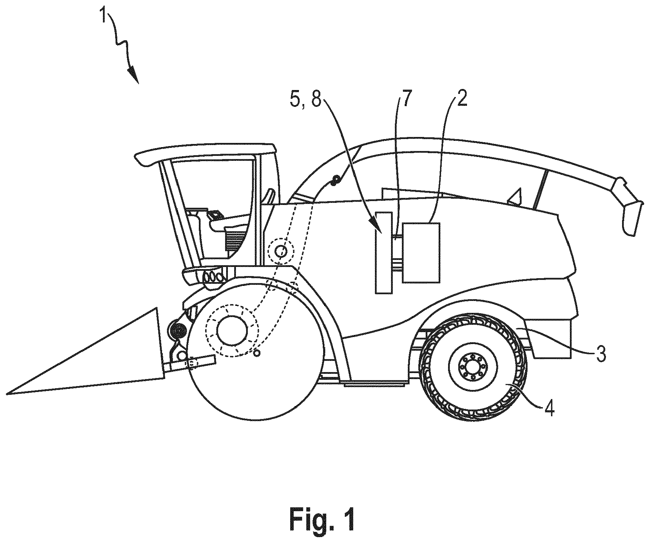

Ein Ausführungsbeispiel, das in den **Figuren 1 bis 6** dargestellt ist, umfasst eine erfindungsgemäße Erntemaschine **1,** die hier in Form eines selbstfahrenden Feldhäckslers ausgebildet ist. Die Erntemaschine **1** umfasst einen Antriebsmotor **2,** der hier von einer Verbrennungskraftmaschine gebildet ist. Ferner umfasst die Erntemaschine **1** insgesamt vier Räder **4,** die jeweils in einem Radkasten **3** angeordnet sind.

Zur Kühlung des Antriebsmotors **2** verfügt die Erntemaschine **1** ferner über ein Kühlsystem **5,** das einen Kühlkörper **6,** einen Kühlventilator **7** und eine Siebeinrichtung **8** umfasst. Der Kühlventilator **7** ist zwischen dem Antriebsmotor **2** und dem Kühlkörper **6** angeordnet und ist dazu vorgesehen und eingerichtet, einen Kühlluftstrom zu erzeugen, der jenseits des Kühlkörpers **6** angesaugt wird und im Zuge des Betriebs des Kühlventilators **7** den Kühlkörper **6** durchströmt und auf diese Weise an dem Kühlkörper **6** anstehende Wärme abführt. Um sowohl den Antriebsmotor **2** als auch den Kühlkörper **6** vor der Verschmutzung mit Schmutzpartikeln zu schützen, die im Zuge eines Ernteprozesses unweigerlich in der Luft angereichert sind, ist das Kühlsystem **5** mit der Siebeinrichtung **8** ausgestattet, die ein Siebelement umfasst. Letzteres kann beispielsweise von einem engmaschigen Siebgitter gebildet sein.

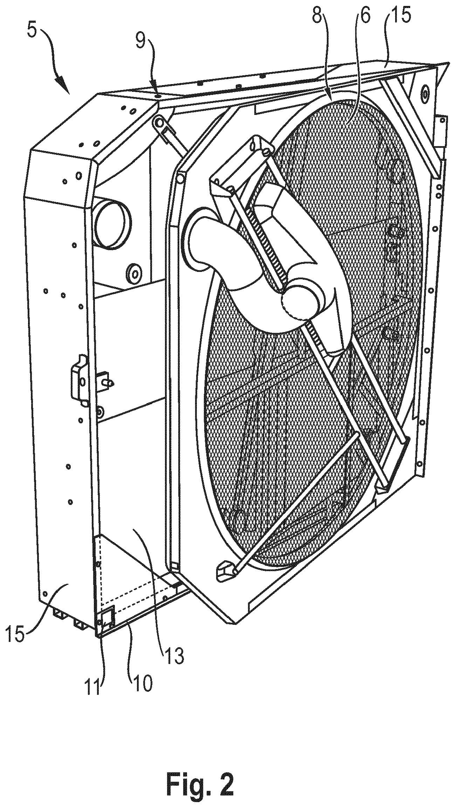

Das Kühlsystem **5** umfasst ferner ein Gehäuse **9,** in dem der Kühlkörper **6** angeordnet ist. Dieses ergibt sich besonders gut anhand von **Figur 2****.** Das Gehäuse **9** weist in dem gezeigten Beispiel einen Abschnitt auf, der eine kubische Grundform aufweist. Dieser Abschnitt ist entsprechend von zwei einander gegenüberliegenden Stirnwänden **13, 14** sowie insgesamt vier Seitenwänden **15** gebildet. Die Flächen der Stirnwände **13, 14** sind in dem gezeigten Beispiel deutlich größer als die jeweiligen Flächen der Stirnwände **15.** Eine untere Seitenwand **15,** die einen unteren Abschluss des Gehäuses **9** bildet, ist von einer Bodenplatte **10** gebildet, die entsprechend den Boden eines Innenraums des Gehäuses **9** definiert.

Das Gehäuse **9** umfasst neben der Bodenplatte **10** zwei an die Bodenplatte **10** angrenzende Auslassöffnungen **11, 12.** Diese sind einander gegenüberliegend in die Stirnwände **13, 14** eingebracht, wobei die Auslassöffnungen **11, 12** jeweils in einer unteren Ecke des Gehäuses **9** angeordnet sind. Dies ergibt sich besonders gut anhand der **Figuren 2 bis 4**. Die Auslassöffnungen **11, 12** grenzen derart an die Bodenplatte **10** an, dass ein jeweiliger unterer Rand der jeweiligen Auslassöffnung **11, 12** in unmittelbarer Nähe zu der Bodenplatte **10** angeordnet ist.

Die Auslassöffnungen **11, 12** wirken jeweils mit einem zugeordneten Schließelement **17** zusammen, das dazu vorgesehen und eingerichtet ist, die zugeordnete Auslassöffnung **11, 12** wahlweise freizugeben oder zu verschließen. Entsprechend sind die Schließelemente **17** jeweils zwischen einer Schließstellung und einer Freigabestellung überführbar. Die Schließelemente **17** sind mittels zweier Befestigungsmittel **18, 19,** die hier von Schraubbolzen gebildet sind, an dem Gehäuse **9** befestigt. Hierbei ist ein erstes Befestigungsmittel **18** senkrecht zu einer Oberfläche der jeweiligen Stirnwand **13, 14** das Gehäuse **9** eingeschraubt, wobei das Befestigungsmittel **18** eine Schwenkachse **20** für das Schließelement **17** definiert. Mithin ist das Schließelement **17** um die Schwenkachse **20** relativ zu dem Gehäuse **9** sowie der jeweiligen Auslassöffnung **11, 12** verschwenkbar.

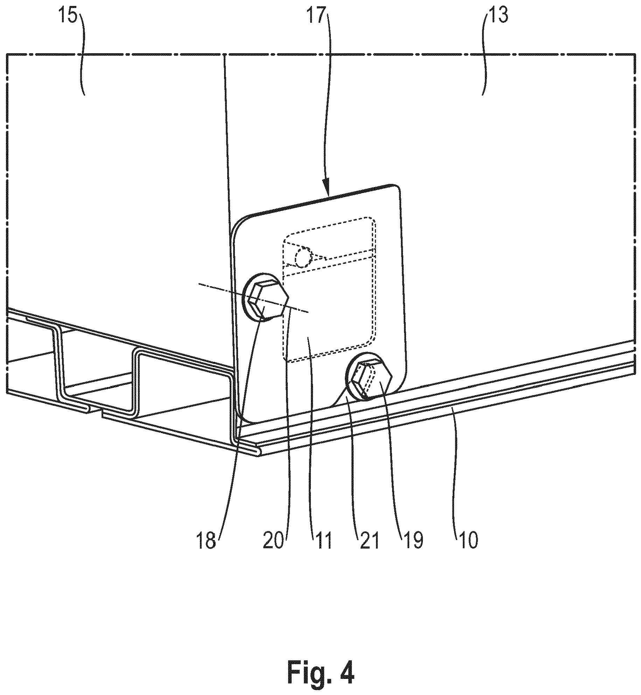

Um eine unbeabsichtigte Bewegung des jeweiligen Schließelement **17** relativ zu der zugehörigen Auslassöffnung **11, 12** zu unterbinden, ist es mittels des zweiten Befestigungsmittels **19** an dem Gehäuse **9** arretiert oder arretierbar. Das zweite Befestigungsmittel **19,** das ebenfalls von einem Schraubbolzen gebildet ist, ist hierzu in einer einseitig offenen, bogenförmig ausgebildeten Ausnehmung **21** des Schließelements **17** angeordnet. Dies ergibt sich besonders gut anhand von **Figur 4****.** Diese Ausgestaltung erlaubt es, dass das zweite Befestigungsmittel **19** lediglich gelöst, das heißt nicht vollständig aus der jeweiligen Stirnwand **13, 14** herausgeschraubt werden muss, um das jeweilige Schließelement **17** in seiner Bewegung um die Schwenkachse **20** freizugeben. Die einseitig offene Ausnehmung **21** erlaubt es daraufhin, das Schließelement **17** um die Schwenkachse **20** zu bewegen und das Schließelement **17** auf diese Weise in seine Freigabestellung zu überführen. Die Freigabe der Auslassöffnungen **11, 12** ist bestimmungsgemäß für einen Reinigungsvorgang des Kühlkörpers **6** vorgesehen, im Zuge dessen der Kühlkörper **6** typischerweise mit einer Reinigungsflüssigkeit beaufschlagt wird, die beispielsweise als Flüssigkeitsstrahl mit Druck auf den Kühlkörper **6** aufgebracht wird. Dies kann beispielsweise durch eine der Auslassöffnungen **11, 12** hindurch folgen, während die an dem Kühlkörper **6** herablaufende Reinigungsflüssigkeit, die sich daraufhin auf der Bodenplatte **10** des Gehäuses **9** sammelt, durch die andere Auslassöffnung **11, 12** hindurch aus dem Gehäuse **9** austreten kann.

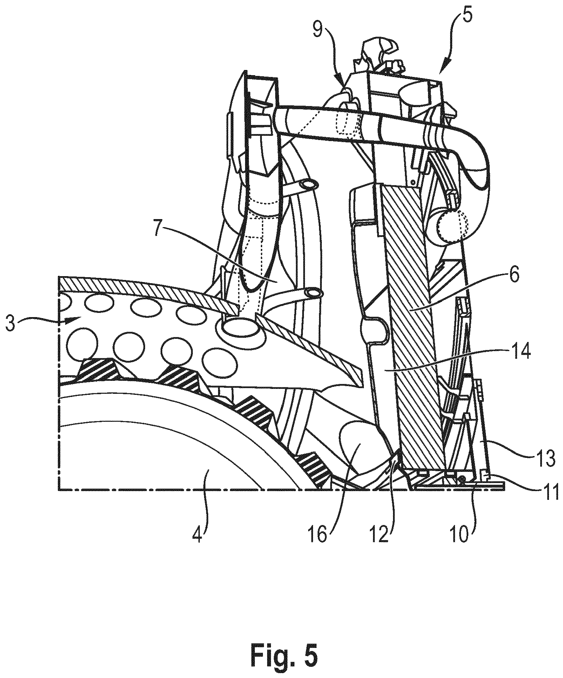

In dem gezeigten Beispiel ist das Kühlsystem **5** derart relativ zu mindestens einem der Radkästen **3** angeordnet, dass sich das Gehäuse **9** zumindest mit einer unteren Ecke, in der die eine Auslassöffnung **12** angeordnet ist, bis in den Radkasten **3** erstreckt. Dies ergibt sich besonders gut anhand von **Figur 5****.** Diese Ausgestaltung ermöglicht es, dass die Reinigungsflüssigkeit mitsamt etwaiger Schmutzpartikel unmittelbar ausgehend von dem Gehäuse **9** durch die Auslassöffnung **12** in den Radkasten **3** übertreten kann.

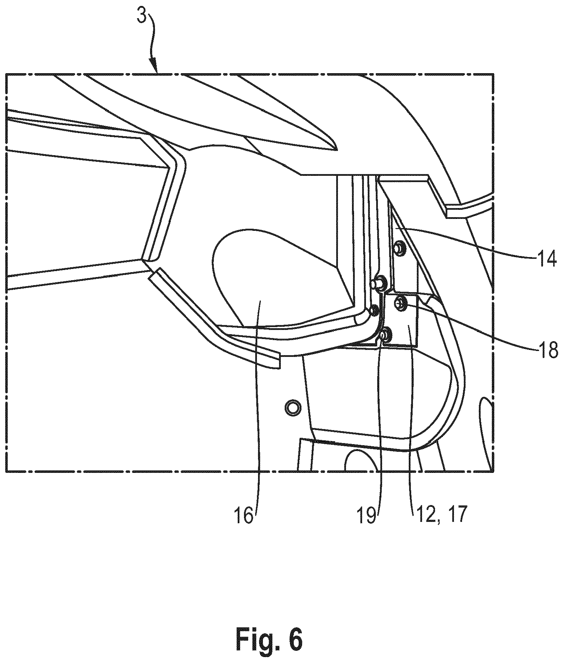

Um eine Kollision des Gehäuses **9** mit einem in dem Radkasten **3** gelagerten Rad **4** zu vermeiden, ist das Gehäuse **9** mit einer Einbuchtung **16** versehen. Dies ergibt sich besonders gut anhand von **Figur 6****.** Die Einbuchtung **16** ist in dem gezeigten Beispiel in einen Abschnitt des Gehäuses **9** eingebracht, der als Ventilatormantel für den Kühlventilator **7** dient.

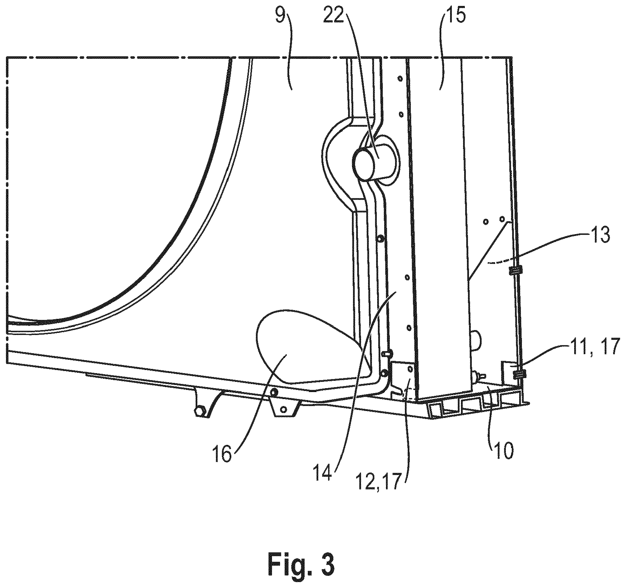

In weiterhin bevorzugter Weise ist in dem gezeigten Beispiel der hinteren Auslassöffnung **12,** die in der hinteren Stirnwand **14** eingebracht ist, räumlich ein Kühlmittelanschluss **22** zugeordnet, mittels dessen ein Kühlmittel dem Kühlkörper **6** zugeführt und/oder umgekehrt von den Kühlkörper **6** abgeführt werden kann. Dies ergibt sich besonders gut anhand von **Figur 3****.**

### Bezugszeichenliste

- 1: Erntemaschine
- 2: Antriebsmotor
- 3: Radkasten
- 4: Rad
- 5: Kühlsystem
- 6: Kühlkörper
- 7: Kühlventilator
- 8: Siebeinrichtung
- 9: Gehäuse
- 10: Bodenplatte
- 11: Auslassöffnung
- 12: Auslassöffnung
- 13: Stirnwand
- 14: Stirnwand
- 15: Seitenwand
- 16: Einbuchtung
- 17: Schließelement
- 18: Befestigungsmittel
- 19: Befestigungsmittel
- 20: Schwenkachse
- 21: Ausnehmung
- 22: Kühlmittelanschluss

## Patentansprüche

1. Selbstfahrende Erntemaschine (1), insbesondere in Form eines Feldhäckslers, umfassend
- einen Antriebsmotor (2),
- ein Kühlsystem (5) zur Kühlung des Antriebsmotors (2),
das Kühlsystem (5) umfassend
- ein Gehäuse (9),
- einen in dem Gehäuse angeordneten Kühlkörper (6),
- ein Kühlventilator (7) zur Erzeugung eines Kühlluftstroms entlang des Kühlkörpers (6),
- eine dem Kühlkörper (6) vorgeordnete Siebeinrichtung (8),
wobei die Siebeinrichtung (8) dazu vorgesehen und eingerichtet ist, in dem Kühlluftstrom mitgeführte Schmutzpartikel zurückzuhalten und auf diese Weise an einer Weiterleitung zu dem Antriebsmotor (2) zu hindern,
**dadurch gekennzeichnet, dass**
das Gehäuse (9) eine Bodenplatte (10) sowie mindestens eine oberhalb der Bodenplatte (10) angeordnete, an die Bodenplatte (10) angrenzende Auslassöffnung (11, 12) umfasst,
wobei die Bodenplatte (10) derart unterhalb des Kühlkörpers (6) angeordnet oder an ein unteres Ende des Kühlkörpers (6) angeschlossen ausgebildet ist, dass sich eine Reinigungsflüssigkeit, mit der der Kühlkörper (6) gereinigt wird, auf der Bodenplatte (10) sammelt.

2. Erntemaschine (1) nach Anspruch 1, **dadurch gekennzeichnet, dass** die Bodenplatte (10) und die mindestens eine Auslassöffnung (11, 12) in einem Abschnitt des Gehäuses (9) ausgebildet sind, der in Strömungsrichtung des Kühlluftstroms betrachtet an die Siebeinrichtung (8) angrenzt.

3. Erntemaschine (1) nach einem der vorhergehenden Ansprüche, **gekennzeichnet durch** mindestens zwei Auslassöffnungen (11, 12), die an einander gegenüberliebenden Seiten des Gehäuses (9), vorzugsweise an einander gegenüberliegenden Stirnwänden (13, 14) des Gehäuses, ausgebildet sind.

4. Erntemaschine (1) nach einem der vorhergehenden Ansprüche, **dadurch gekennzeichnet, dass** zumindest ein Abschnitt des Gehäuses (9) eine zumindest im Wesentlichen kubische Grundform aufweist, wobei Flächen zweier einander gegenüberliegender Stirnwände (13, 14) des Gehäuses (9) Flächen vier weiterer, zusammen mit den Stirnwänden (13, 14) die kubische Grundform des Gehäuses (9) bildender Seitenwände (15) des Gehäuses (9) deutlich übersteigen.

5. Erntemaschine (1) nach einem der vorhergehenden Ansprüche, **dadurch gekennzeichnet, dass** die mindestens eine Auslassöffnung (11, 12) in eine senkrecht zu der Bodenplatte (10) orientierte Stirnwand (13, 14) des Gehäuses (9) eingebracht ist, wobei vorzugsweise die Siebeinrichtung (8) derselben Stirnwand (13) zugeordnet ist, in der mindestens eine Auslassöffnung (11) eingebracht ist.

6. Arbeitsmaschine (1) nach Anspruch 5, **dadurch gekennzeichnet, dass** die mindestens eine Auslassöffnung (12) an die Stirnwand (14) des Gehäuses (9) eingebracht ist, die einem Radkasten (3) der Erntemaschine (1) zugeordnet ist, sodass eine Reinigungsflüssigkeit ausgehend von einem Innenraum des Gehäuses (9) durch die Auslassöffnung (12) unmittelbar in den Radkasten (3) übertreten kann.

7. Arbeitsmaschine (1) nach Anspruch 6, **dadurch gekennzeichnet, dass** das Gehäuse (9) in einem in den Radkasten (3) hinein vorstehenden Bereich eine Einbuchtung (16) aufweist, sodass im Zuge eines Betriebs der Erntemaschine (1) eine Kollision zwischen einem in dem Radkasten (3) angeordneten Rad (4) und dem Gehäuse (9) vermieden ist.

8. Erntemaschine (1) nach einem der vorhergehenden Ansprüche, **gekennzeichnet durch** mindestens ein Schließelement (17), mittels dessen die mindestens eine Auslassöffnung (11, 12) wechselweise verschließbar und freigebbar ist, wobei vorzugsweise das Schließelement (17) von einer flächigen Platte gebildet ist.

9. Erntemaschine (1) nach Anspruch 8, **dadurch gekennzeichnet, dass** das Schließelement (17) an dem Gehäuse (9) mittels Befestigungsmitteln (18, 19), die vorzugsweise von Schraubbolzen gebildet sind, befestigt ist.

10. Erntemaschine (1) nach Anspruch 8 oder 9, **dadurch gekennzeichnet, dass** das Schließelement (17) zwischen einer Schließstellung und einer Freigabestellung um eine Schwenkachse (20) relativ zu dem Gehäuse (9) verschwenkbar ist, wobei vorzugsweise die Schwenkachse (20) von einem Befestigungsmittel (18) definiert ist, mittels dessen das Schließelement (17) bedarfsweise verdrehfest an dem Gehäuse (9) befestigbar ist.

11. Erntemaschine (1) nach Anspruch 10, **dadurch gekennzeichnet, dass** das Schließelement (17) mittels zweier Verbindungsmittel (18, 19) an dem Gehäuse (9) befestigt oder befestigbar ist, wobei das erste Befestigungsmittel (18) die Schwenkachse (20) definiert und das zweite Befestigungsmittel (19) in einer einseitig offenen, vorzugsweise bogenförmigen, Ausnehmung (21) des Schließelements (17) angeordnet ist, sodass das Schließelement (17) um die Schwenkachse (20) relativ zu dem Gehäuse (9) verschwenkbar ist, ohne dass das zweite Befestigungsmittel (19) entfernt werden muss.

12. Erntemaschine (1) nach einem der vorhergehenden Ansprüche, **dadurch gekennzeichnet, dass** an dem Gehäuse (9) ein Kühlmittelanschluss (22) zur Zu- und/oder Abführung von Kühlmittel zu bzw. von dem Kühlkörper (6) ausgebildet ist, wobei der Kühlmittelanschluss (22) benachbart zu der mindestens einen Auslassöffnung (12) angeordnet ist.
